# EUROPEAN PATENT SPECIFICATION

(11) **EP 0 985 485 B1**
(45) Date of publication and mention of the grant of the patent: **16.07.2003**
(21) Application number: 99306618.2
(22) Date of filing: 20.08.1999
(51) Int. Cl.: B23K 26/10

(54) **Laser welding machine for the welding of sections in large structural components**
Laserschweissmaschine zum Schweissen von Profilen auf grossformatigen Strukturbauteilen
Machine de soudage au laser pour souder des sections dans des structures de grand format

(30) Priority: 07.09.1998 ES 9801884
(43) Date of publication of application: 15.03.2000
(73) Proprietor: M. Torres Disenos Industriales, S.A., 31007 Pamplona (ES); Airbus Deutschland GmbH, 21129 Hamburg (DE)
(72) Inventor: Martinez Torres, Manuel, 31007 Pamplona (ES); Wolf, Manfred, Daimler Chrysler Aero. Airbus GmbH, 26945 Nordenham (DE); Gedrat, Olaf, Daimler Chrysler Aero. Airb. GmbH, 26945 Nordenham (DE); Kuck, Gunter, Daimler Chrysler Aero. Airb. GmbH, 26945 Nordenham (DE); Neye, Gerhard, Daimler Chrysler Aero. Airb. GmbH, 26945 Nordenham (DE); Hermoso, Julian Baigorri, 31004 Pamplona Navarro (ES); Lusarreta, Javier Medina, 31008 Pamplona Navarra (ES)
(74) Representative: Evens, Paul Jonathan

(56) References cited:
- EP-A- 0 838 801
- US-A- 4 223 201

## Description

The invention relates to a laser welding machine for the welding of sections in large structural components, especially aluminium spars to curved, cylindrical or spherical aluminium skin sheets in aircraft construction, as defined in the pre-characterizing portion of claim 1. Such a laser welding machine is known from EP-A-0 838 301.

The question of weight is one of the principal factors which has to be borne in mind in the design of aircraft construction or structures. For this reason aircraft construction makes use of light materials. These must nevertheless have the necessary strength, and this is provided by materials such as aluminium.

The construction of structures, and especially construction of a fuselage, from aluminium is based on thin aluminium sheets. These sheets form the "skin" of the hull/fuselage. For strength reasons the sheets are reinforced with sections, also made of aluminium, which are known among other things as "spars".

The spars are attached to the inner side of the structures, providing strength to the skin sheets. Hitherto spars have been riveted to the skin sheet, and because of this the spars have an inverted "T" cross-section through the base of which the rivets pass.

This process nevertheless gives rise to some problems associated with the point nature of the attachment resulting from the riveting process, the slowness of the riveting process, the considerable weight arising from use of the rivets, and the need to provide the spars with fins at the base to hold the rivets. In the past the attachment of spars by welding has been rejected, as aluminium can only be welded with difficulty, and under special conditions. Also for a long time there were no machines which made it possible to perform automatic high precision welding with the necessary reliability. The welding machine described at the outset is detailed in the progress reports of the VDI (Association of German Engineers) line 2; Manufacturing Technique no. 326, paper C7.94 by Dip. Ing. Peter Heider, "Laser-appropriate construction and appropriate laser means of manufacture for the welding of large structural components made of aluminium". The known welding jig for the bilateral and simultaneous welding of spars to a skin sheet includes among other things a variable beam/support on which the skin sheet is placed and a flexible tensioning system using roller guides for precise positioning and fixing the spars on the skin sheet during a welding process.

A pair of rollers which precede the laser beam and another positioned behind are provided in relation to the lateral guide for a spar. Each pair of rollers comprises a guide roller for determining the position of the spar and a tensioning roller. The spar is positioned by the mechanised head, which is driven by a digital control program which is orientated through fixed points to the actual position of the skin sheet.

Pressing of a spar against the skin sheet is ensured by means of two rollers which are placed above the welding zone. Here the prior adjustment of the pressure rollers and the lateral tensioning rollers is adjusted by means of springs, while relative movement between the mechanised head and the workpieces can be applied from both the work pieces and the mechanised head. One disadvantage nevertheless is that known fixing and tensioning equipment is specifically shaped to fit the component.

US-A-4,223,201 discloses an automated welding facility for the fabrication of shell sections suitable for ship construction and utilizing laser welding.

The purpose of the invention is to provide a welding machine of the type indicated at the outset which makes automated high precision laser welding, preferably for aluminium sections to aluminium skin sheets in aircraft construction, possible.

In accordance with the present invention, there is provided laser welding apparatus according to claim 1.

Further developments of the invention are defined in dependent claims 2 to 15.

An embodiment of the invention will now be described by way of example with reference to the accompanying drawings in which:-
Figure 1 is a perspective view which shows the welding machine to which this invention relates in one possible non-restrictive embodiment;
Figure 2 is a diagrammatical view showing the course of the laser beams from the laser or resonator units (1 and 2) to the outlets (1.3 and 2.3);
Figure 3 is a side view of the head (7) of the machine;
Figure 4 is a front view of the head (7) in the partial cross-section IV-IV indicated in Figure 3;
Figure 5 is a view of head (7) from the side opposite that in Figure 3;
Figure 6 is a perspective diagrammatical view of the machine moving on head (7) over a sheet (4) having a cylindrical surface, over its central generatrix;
Figure 7 shows a detail of the part of head (7) corresponding to figure 6;
Figure 8 is a view as that in Figure 6, but in this case with head (7) moving along a generatrix to one side of the central generatrix;
Figure 9 shows details of part of head (7) corresponding to figure 8;
Figure 10 is a view similar to that in Figure 6 but now with head (7) moving along the median line of a plate (4) having a conical surface;
Figure 11 shows details of the part of head (7) corresponding to figure 10;
Figure 12 is a view similar to that in Figure 10 but head (7) is now moving without following the median line of the conical part of the plate (4);
Figure 13 shows details of the part of head (7) corresponding to figure 12;
Figure 14 is a diagrammatical perspective view showing the arrangement of the rollers (24 and 25) supporting head (7) against sections (5);
Figure 15 is a side view of the region of head (7) where the rollers (24 and 25) are located. This view is that along arrow XV shown in Figure 16;
Figure 16 is a partial cross-section frontal view of the lower part of head (7) housing rollers (24) and sensor (23);
Figure 17 shows sensor (23) diagrammatically in a view along XVII-XVII in Figure 18; and
Figure 18 shows the cross-section XVIII-XVIII indicated in Figure 16.

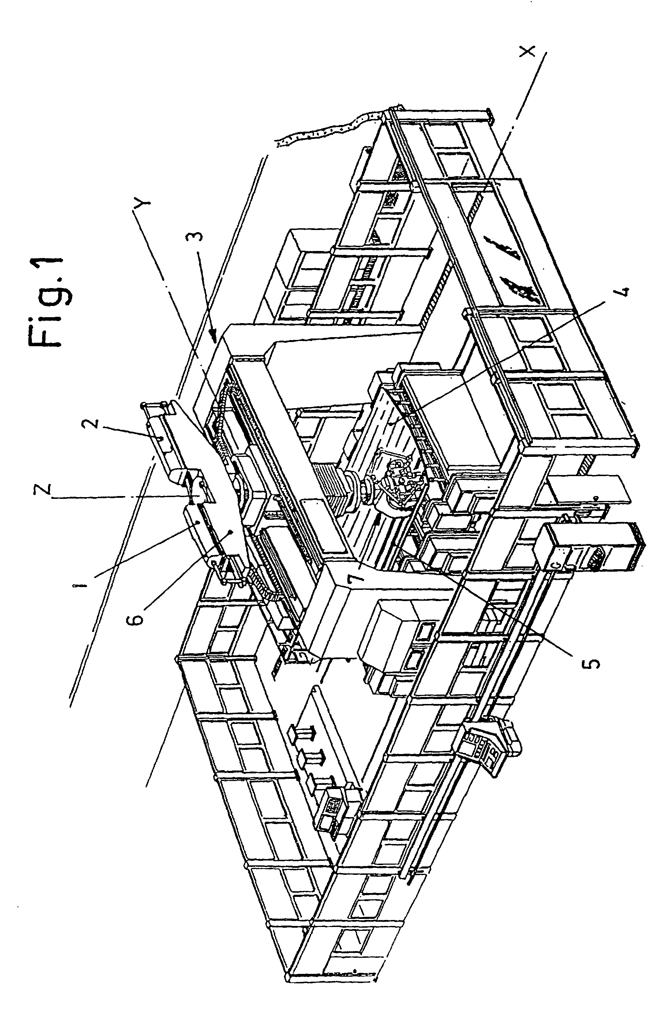

The subject matter of this invention is a laser welding machine, shown diagrammatically and in accordance with a possible embodiment in Figure 1, in which it will be seen that two laser or resonator units (1 and 2) mounted on a frame (6) are located on a portal commonly known as a gantry (3) in such a way that through the movements of gantry (3) frame (6) and with it resonators (1 and 2) can move along the X,Y,Z axes.

Head (7) of the welding machine hangs from gantry (3) and in the non-restrictive example in Figure 1 is carrying out a welding process in which aluminium sections (5) known commonly as "stringers" are being welded to a curved aluminium sheet (4) belonging to the fuselage of an aircraft so that the two welding beams from the resonators (1 and 2) weld the two sides of stringers (5) in a single pass.

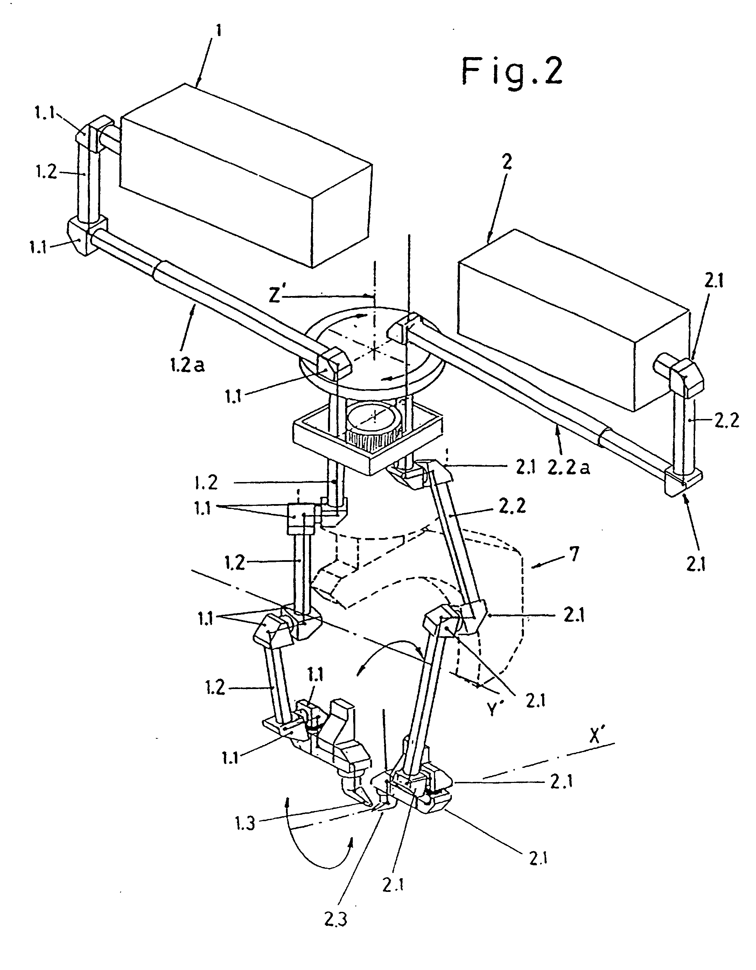

Figure 2 provides a diagrammatical representation of resonators (1 and 2) and the trajectory followed by each laser beam from resonator (1 or 2) to the corresponding outlet (1.3) or (2.3) respectively.

As will be seen in Figure 2, tubular conduits (1.2) lead from resonator (1) and of these at least the one indicated by reference (1.2a) is telescopic. The various tubular conduits (1.2 and 1.2a) are connected by means of articulated joints (1.1) within which there is a set of mirrors so that the laser beam leaving resonator (1) is carried through tubular conduits (1.2 and 1.2a) and is redirected by the mirrors at articulated joints (1.1) to reach outlet (1.3). The same thing happens in the case of resonator (2) which is associated with tubular conduits (2.2 and 2.2a) and corresponding articulated nodes (2.1).

With this arrangement and keeping resonators (1 and 2) static, outlets (1.3) and (2.3) can be moved, and with them the laser beams, as will be seen below.

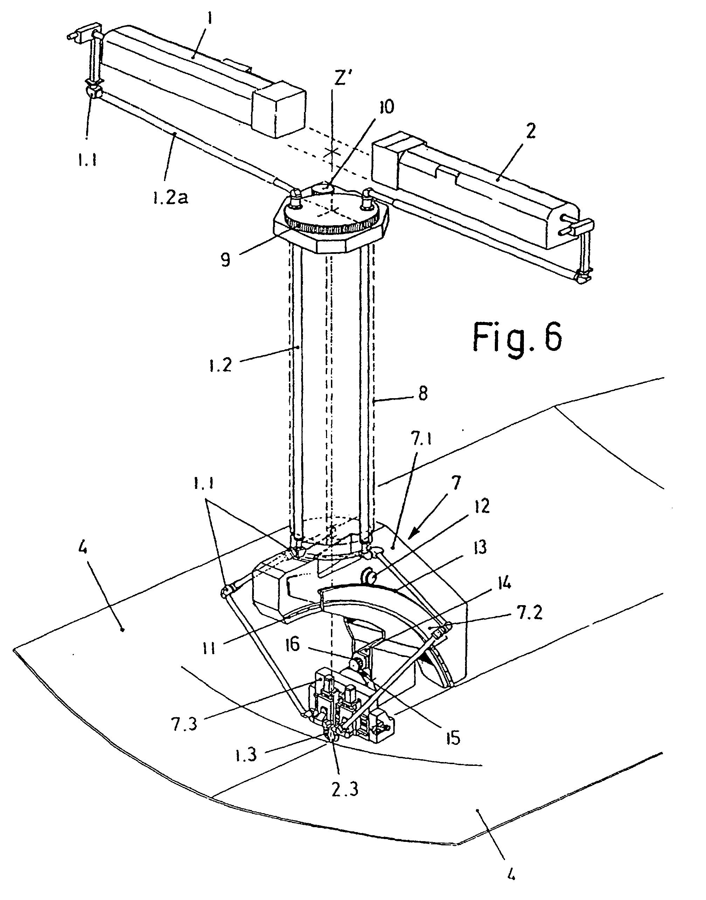

Outlets (1.3 and 2.3) are mounted on head (7) which is suspended from a column (8) as shown in Figure 6. Head (7) comprises three principal parts (7.1, 7.2 and 7.3).

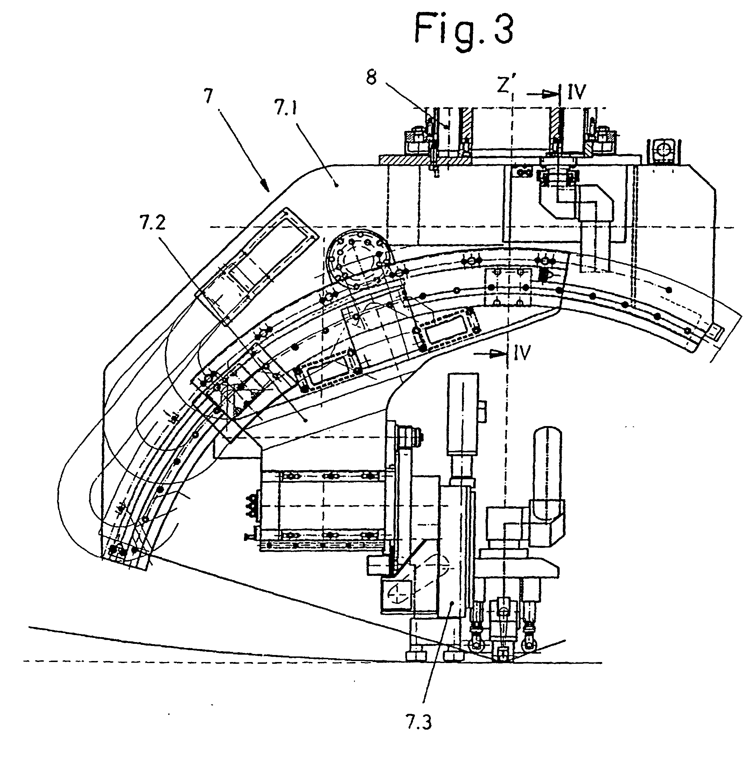

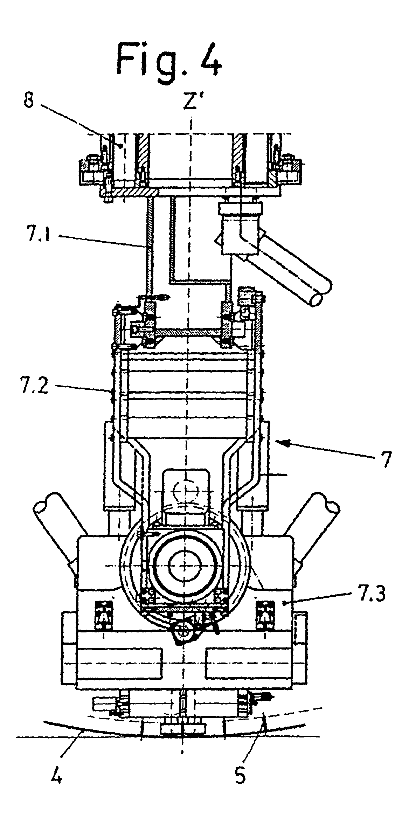

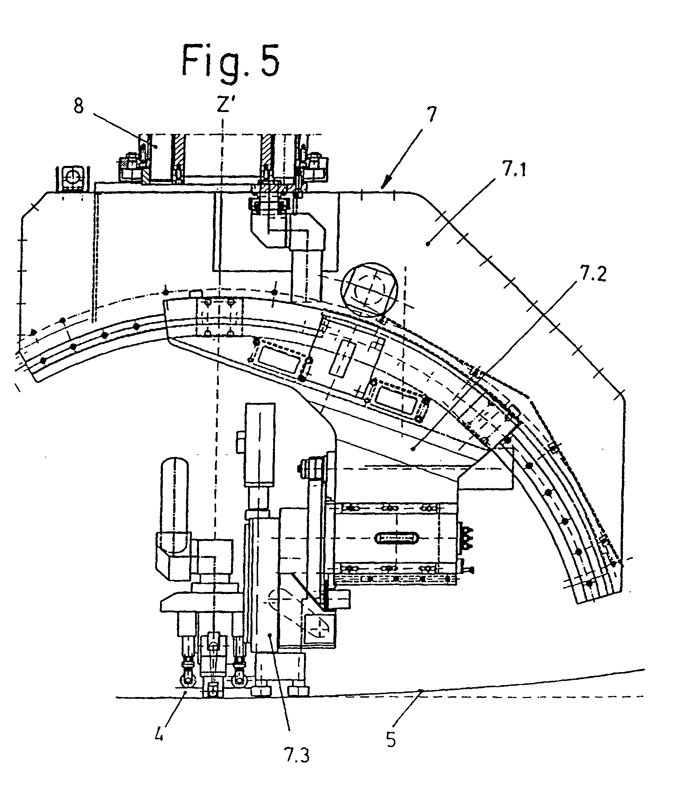

The construction of these three parts (7.1, 7.2 and 7.3) of head (7) is shown in detail in Figures 3, 4 and 5. Thus the part identified by reference (7.1) is the part which is attached to supporting column (8) so that as column (8) rotates about an axis Z', the entire head (7) also rotates about that axis Z'. To bring about rotation of column (8) this comprises a transmission comprising a sprocket (9) and a gearwheel (10) driven by a motor which is not shown, see Figure 6.

Part (7.2) of head (7) is mounted on curved guides (11) and is able to perform guided movements along them. A pinion (12) driven by a corresponding motor projects from each side of part (7.1) to bring about movement of this part, see Figure 6.

The two pinions (12) on the two sides are associated with a curved rack (13) on the upper side of part (7.2) so that rotation of pinions (12) is translated into movement of part (7.2) along curved guides (11) in one direction or the other about a theoretical axis identified by the letter Y', as shown in Figure 2.

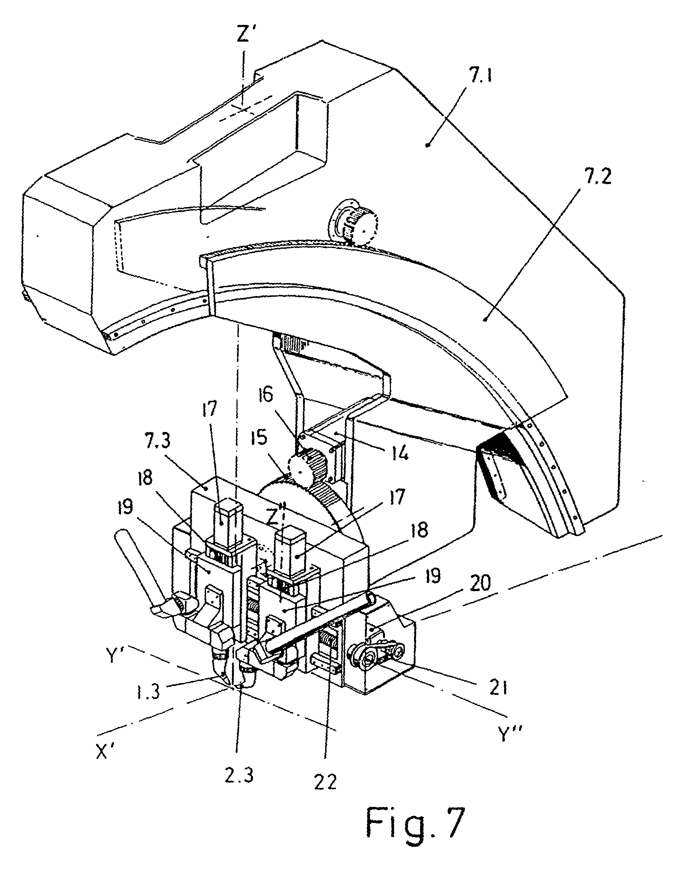

In addition to this, a motor (14) which rotates a gear (16) in both directions is mounted on this part (7.2) of head (7). Gear (16) is coupled to another larger gear (15) in the third part of head (7) identified as part (7.3), as will be seen in Figures 6 and 7.

Through the action of motor (14) part (7.3) of head (7) rotates about a theoretical axis X' as shown in Figure 2.

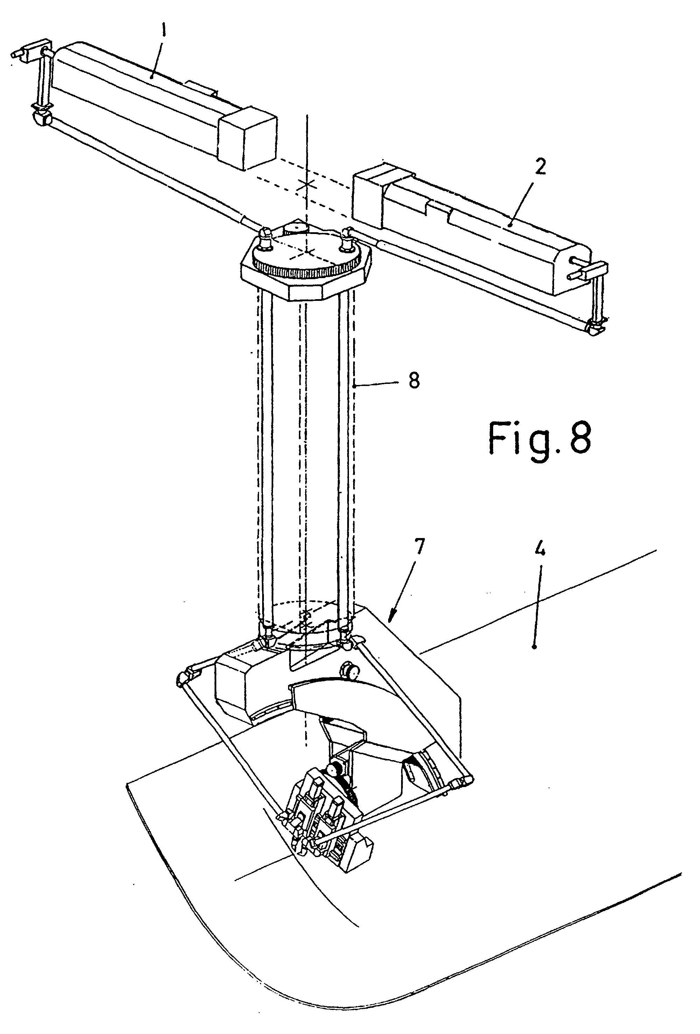

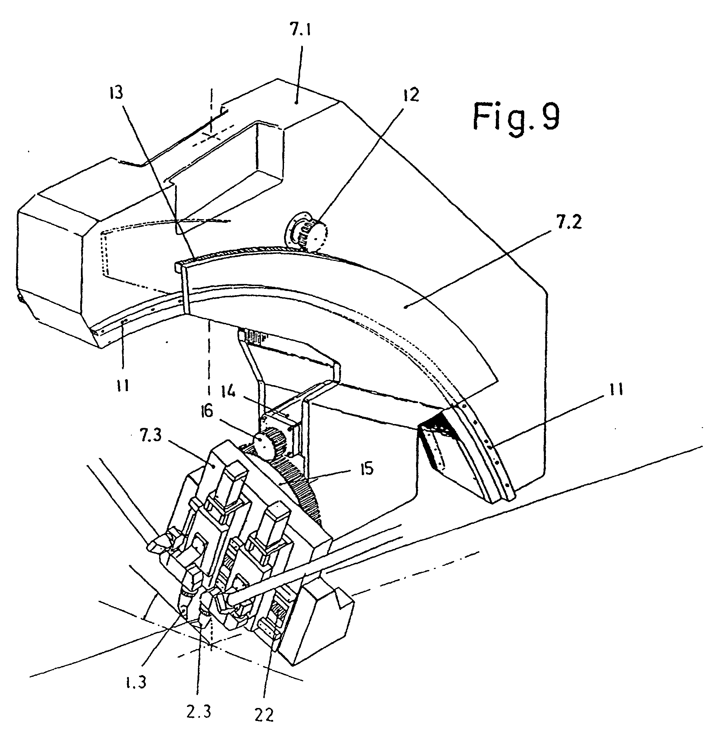

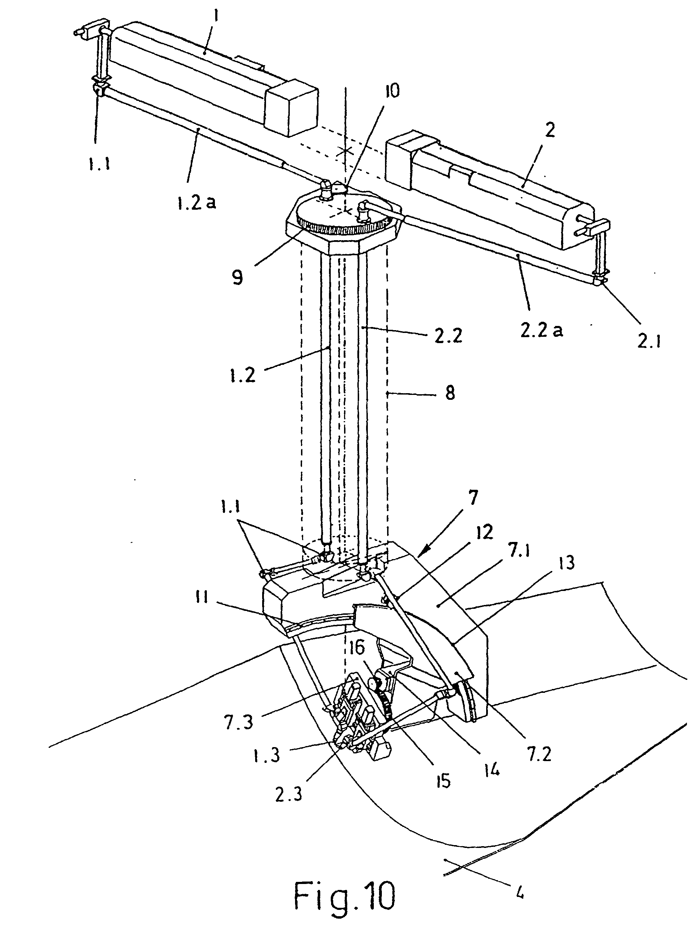

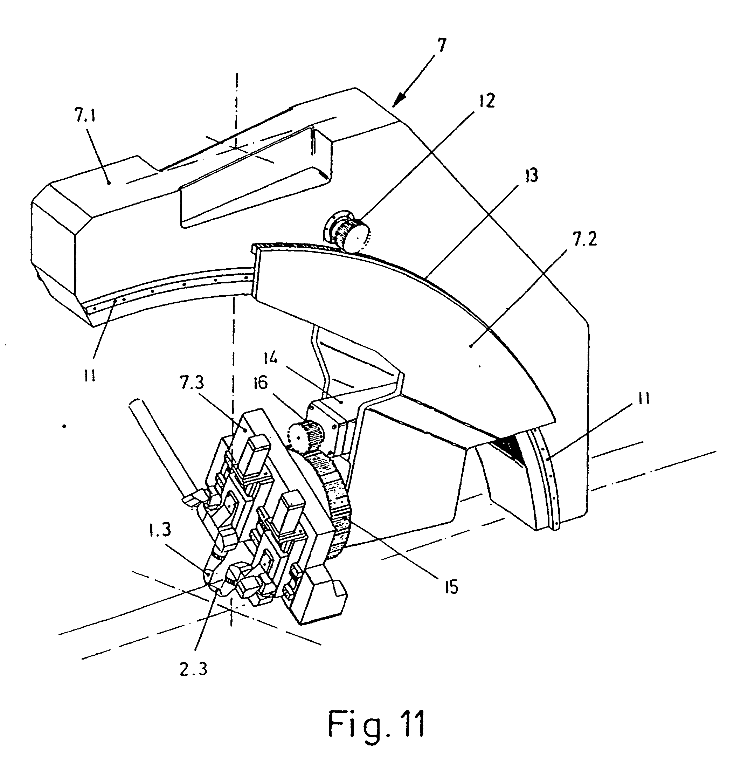

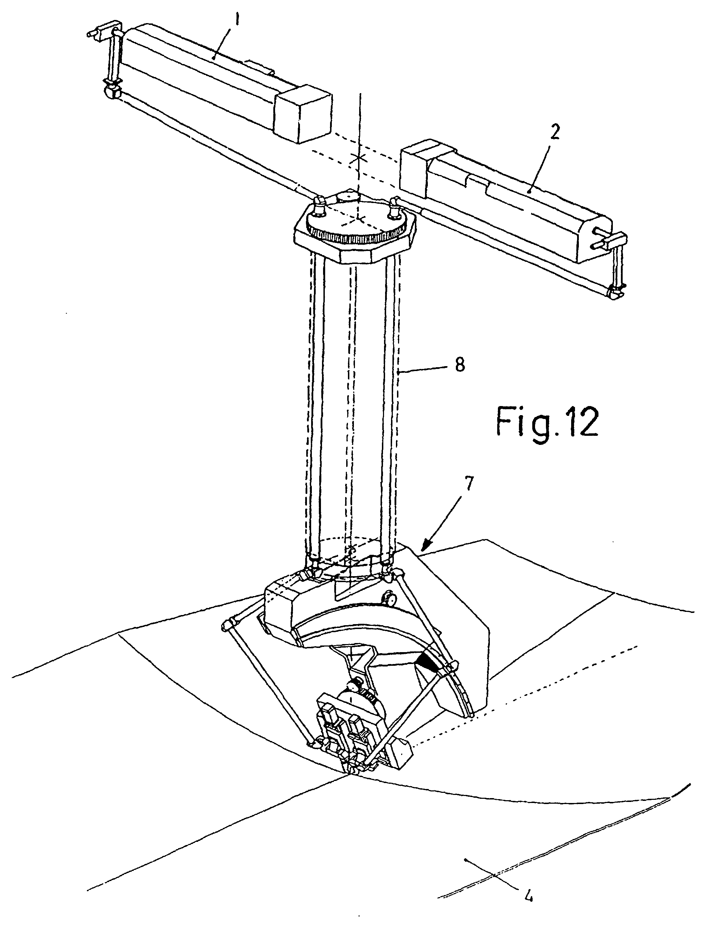

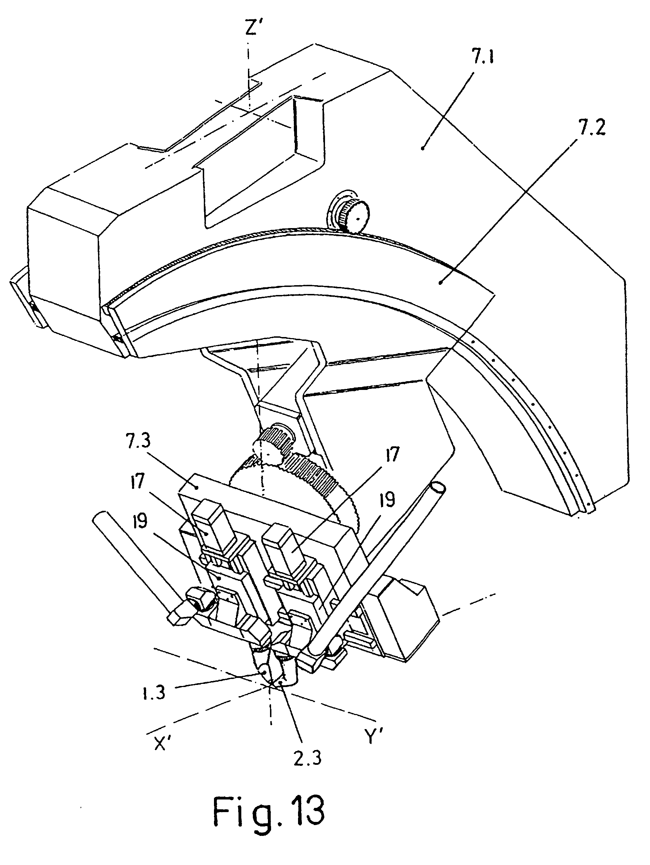

In this way outlets (1.3) and (2.3) have three possibilities for different rotational movements about the three axes X', Y', Z', which are related to each other in the same way as the axes of a system of coordinates. These possibilities for different combinations of rotational movements together with movements along the X, Y, Z axes with head (7) makes through gantry (3) means that outlets (1.3) and (2.3) can follow trajectories over parts having a flat, curved, conical, or even spherical surface, or combinations of these surfaces, as an attempt has been made to represent diagrammatically in figures 6 to 13.

When the laser beams are in use each strikes one side of sections (5) so that section (5) is welded to sheet (4) along both sides through a single pass of head (7). To achieve correct welding the two beams must converge on the focal point established for the purpose at all times.

In this respect it should be borne in mind that the computer which controls movements of the machine will be programmed in relation to the shapes of sheets (4) and sections (5), but it must be realised that these parts will include some unforeseen irregularities, and that errors, which will be cumulative, may also occur in the trajectories of the beams from resonators (1 and 2) to outlets (1.3 and 2.3). As will be seen below, the machine according to this invention also overcomes these errors and does so virtually in real time.

In fact, and as will be seen in detail in Figure 7, each of outlets (1.3 and 2.3) is mounted on a support (19) which can move along trajectories which are perpendicular to each other along axes Y" and Z" through the action of two screws (18 and 22) through their corresponding nuts.

Screw (18) is driven by a motor (17) and screw (22) is driven by a motor (20) through corresponding transmission (21).

In this way, by moving each of outlets (1.3 and 2.3) along the two perpendicular paths of axes Y" and Z" possible errors can be corrected and focal convergence of the two laser beams can be maintained.

With this object and for the detection of these errors provision is made for a sensor system (23), of the intelligent type, which detects the difference between actual and theoretical positions virtually in real time, correcting any deviations which occur, in connection with at least one of outlets (1.3 or 2.3).

Satisfactory tests have been performed with a "scout" sensor system (23) manufactured by Daimler Benz Aerospace, specifically for laser machines.

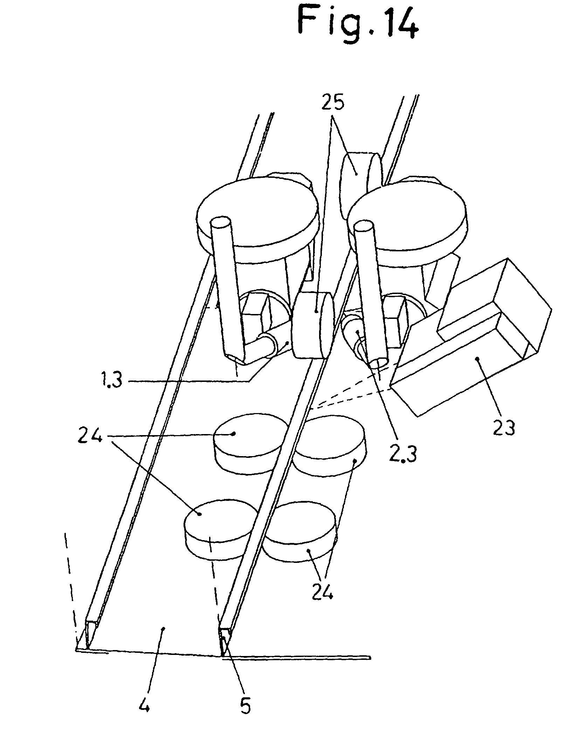

It has been provided that if a single sensor (23) is mounted next to one of outlets (1.3 or 2.3) as shown in Figures 14, 16 and 17, this sensor (23) will control motors (17 and 20) corresponding to the two vertical screws (18) of the two outlets (1.3 and 2.3) and the horizontal screw (22) of one of these, the other horizontal screw (22) being moved by digital control. If two sensors (23) are fitted, each will control the motors (17 and 20) of screws (18) and (22) corresponding to outlets (1.3 or 2.3) as appropriate.

In addition to this, it will be seen, diagrammatically, in Figure 14 that the machine includes paired roller tracks (24) in head (7) which contact the sides of sections (5) and a pair of rollers (25) pressing upon them so as to guide movements of head (7) along sections (5).

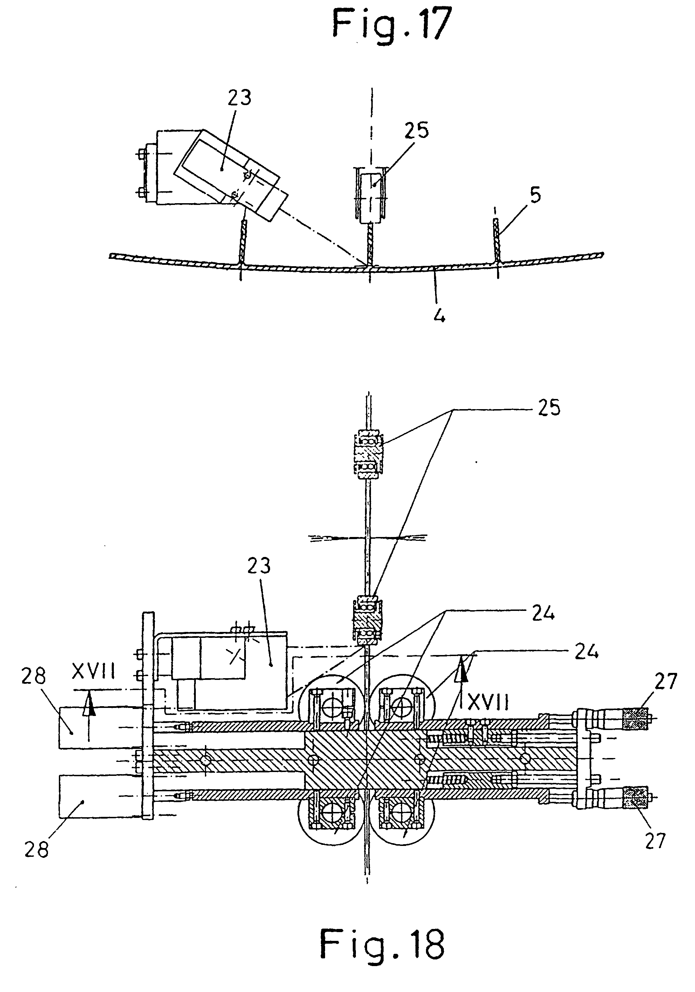

Of the two pairs of rollers (24) those on one side are positioned by corresponding micrometers (27), as will be seen in Figure 18, while those on the other side are pressed against the corresponding side of section (5) through the action of corresponding rollers (28).

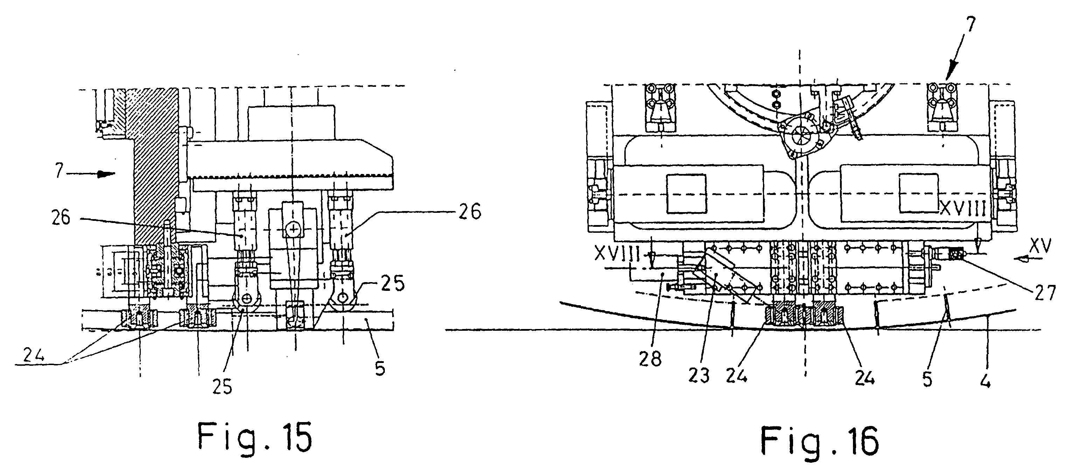

For their part rollers (25) are connected to the pistons of corresponding cylinders (26) as will be seen in Figure 15. These cylinders (26) press rollers (25) against the upper edge of sections (5) thus maintaining constant contact between the latter and the former.

It has been provided that the machine should incorporate additional means and devices in head (7) to improve its working conditions and performance. Thus provision has been made to provide head (7) with a system for the automatic supply of welding rod, together with a chamber for direct visual inspection of the welding and a means for checking weld quality. None of these means and systems are described in detail in this invention because they are conventional means which have already been applied in other welding machines and in any case independent means or systems which themselves bring their own functional characteristics to the machine.

## Claims

1. Laser welding apparatus for welding a section to a large structural component, *e.g*. an aluminium spar to a curved skin sheet in aircraft construction, comprising:
a support for supporting a structural component;
a roller system for guiding a section and pressing it against the structural component;
a frame (6) for supporting at least two laser or resonator units (1, 2) through which in use laser beams are simultaneously generated;
means for providing relative movement between the frame and the support, and
guide members comprising conduits (1.2, 2.2) and articulations (1.1, 2.1) with corresponding internal mirrors, each for directing a laser beam from a respective unit through a respective outlet opening (1.3, 2.3) and towards a respective side of a welding point located close thereto;
**characterized in that** the outlet opening of each guide member is attached to a head (7) which is mounted for rotation about three axes (X',Y',Z').

2. Laser welding machine according to claim 1, wherein there are two laser or resonator units, and the guide members of both units (1, 2) are constructed to be symmetrical to each other.

3. Laser welding machine according to claim 1 or claim 2, wherein the ends of the guide members with the outlet openings (1.3, 2.3) are mechanically connected to the head (7) by means of fixing supports (19) which can move along two axes (Y", Z").

4. Laser welding machine according to claim 3, wherein the fixing supports (19) have a joint action with threaded screws (18, 22) to bring about movements in the direction of the axes (Y", Z").

5. Laser welding machine according to claim 4, wherein the threaded screws (18, 22) are driven by motors (17, 20).

6. Laser welding machine according to claim 4 or claim 5, wherein at least one sensor (23) configured to record variations between theoretical and actual movements of the head (7), and passes these to a correction mechanism, is provided for control of the threaded screws (18, 22) and through this for control of the distances between the outlet openings (1.3, 2.3) of the structural members and the welding point.

7. Laser welding machine according to any one of the preceding claims, wherein the head (7) comprises:
- a first component (7.1) fixed to a vertical column (8) which is rotatable about its longitudinal axis (Z');
- a second component (7.2) movably connected to the first component (7.1) along curved guides (11) located on the first component (7.1), thereby being rotatable about a further axis (Y'); and
- a third component (7.3), coupled to the second component (7.2) and supporting fixing supports (19) attached to the head (7), which is rotatable about a further axis (X').

8. Laser welding machine according to claim 7, wherein the outlet openings (1.3, 2.3) of the guiding members are rotatable independently of each other about three axes (X', Y', Z') or simultaneously about two of those three axes (X',Y',Z').

9. Laser welding machine according to any one of the preceding claims, wherein the roller system is mounted on the head (7) and has two pairs of guide rollers (24) which roll along the side walls of the section being welded (5) and pressure rollers (25) which roll along the upper edge of the section (5).

10. Laser welding machine according to claim 9, wherein at least one of the two pairs of guide rollers (24) is positioned by means of micrometer screws (27).

11. Laser welding machine according to claim 10, wherein the other pair of guide rollers (24) can be pressed against the side wall of the section being welded by means of a pressurising roller (28).

12. Laser welding machine according to claim 9, wherein the pressure rollers (25) press against the upper edge of the section being welded (5) through additional pressurising rollers (28).

13. Laser welding machine for according to claim 7, wherein the second component (7.2) of the head (7) has a curved rack (13) which acts together with a pinion (12) fixed to the first component (7.1) to bring about gyratory movement of the second component (7.2) with respect to the first component (7.1) about axis of rotation (Y').

14. Laser welding machine according to claim 7 and claim 13, **characterised in that** the second component (7.2) of the head (7) has a motor (14) driving a pinion (16) and **in that** this pinion (16) acts jointly with a pinion (15) housed in the third component (7.3) to bring about gyratory movement of the third component (7.3) with respect to the second component (7.2) about axis of rotation (X').

15. Laser welding apparatus according to any one of the preceding claims, in which the frame (6) is coupled to a gantry (3) for movement along Cartesian axes (X,Y,Z) relative to the support.

## Patentansprüche

1. Laserschweißvorrichtung zum Aufschweißen eines Profils auf ein großes Bauteil, zum Beispiel eines Aluminiumsholms auf ein zylindrisch gewölbtes Außenhautblech im Flugzeugbau, aufweisend:
eine Auflage zum Abstützen eines Bauteils,
ein Rollensystem zur Führung eines Profils und zum Andrücken des Profils an das Bauteil,
einen Rahmen (6) zum Tragen von mindestens zwei Laser- bzw. Resonatoreinheiten (1, 2), durch die während ihres Betriebs Laserstrahlen gleichzeitig erzeugt werden,
Mittel zur Ermöglichung von Bewegungen des Rahmens und der Auflage relativ zueinander, und
Führungsglieder, aufweisend Rohre (1.2,2.2) und Gelenke (1.1,2.1) mit entsprechenden Innenspiegeln, von denen jeder einen Laserstrahl von einer entsprechenden Einheit durch eine entsprechende Austrittsöffnung (1.3, 2.3) und hin zu einer entsprechenden Seite einer Schweißstelle in der Nähe der Austrittsöffnung leitet,
**dadurch gekennzeichnet, dass** die Austrittsöffnung jedes Führungsglieds an einem Kopf (7) befestigt ist, der so montiert ist, dass er sich um drei Achsen (X', Y', Z') drehen kann.

2. Laserschweißmaschine nach Anspruch 1, **dadurch gekennzeichnet, dass** zwei Laser- bzw. Resonatoreinheiten vorhanden sind und die Führungsglieder beider Einheiten (1, 2) so konstruiert sind, dass sie symmetrisch zueinander verlaufen.

3. Laserschweißmaschine nach Anspruch 1 oder 2, **dadurch gekennzeichnet, dass** die Enden der Führungsglieder mit den Austrittsöffnungen (1.3, 2.3) durch Halterungen (19), die sich entlang der beiden Achsen (Y", Z") bewegen können, mechanisch mit dem Kopf (7) verbunden sind.

4. Laserschweißmaschine nach Anspruch 3, **dadurch gekennzeichnet, dass** die Halterungen (19) mit Gewindeschrauben (18, 22) zusammenwirken, um Bewegungen in Richtung der Achsen (Y", Z") zu bewirken.

5. Laserschweißmaschine nach Anspruch 4, **dadurch gekennzeichnet, dass** die Gewindeschrauben (18, 22) durch Motoren (17, 20) angetrieben werden.

6. Laserschweißmaschine nach Anspruch 4 oder 5, **dadurch gekennzeichnet, dass** mindestens ein Sensor (23), der so konfiguriert ist, dass er Abweichungen zwischen theoretischen und tatsächlichen Bewegungen des Kopfes (7) registriert und diese registrierten Werte an einen Korrektionsmechanismus übermittelt, der Steuerung der Gewindeschrauben (18, 22) und dadurch der Steuerung der Abstände zwischen den Austrittsöffnungen (1.3, 2.3) der Bauteile und der Schweißstelle dient.

7. Laserschweißmaschine nach einem der vorangehenden Ansprüche, **dadurch gekennzeichnet, dass** der Kopf (7) aufweist:
- ein erstes Teil (7.1), das an einer senkrechten Säule (8) befestigt ist, die um ihre Längsachse (Z') drehbar ist;
- ein zweites Teil (7.2), das entlang gekrümmter Führungen (11), die sich auf dem ersten Teil (7.1) befinden, beweglich mit dem ersten Teil (7.1) verbunden ist und dadurch um eine weitere Achse (Y') drehbar ist; und
- ein um eine weitere Achse (X') drehbares drittes Teil (7.3), das mit dem zweiten Teil (7.2) verbunden ist und am Kopf (7) befestigte Halterungen (19) trägt.

8. Laserschweißmaschine nach Anspruch 7, **dadurch gekennzeichnet, dass** die Austrittsöffnungen (1.3, 2.3) der Führungsglieder unabhängig voneinander um drei Achsen (X', Y', Z') oder gleichzeitig um zwei dieser drei Achsen (X', Y', Z') drehbar sind.

9. Laserschweißmaschine nach einem der vorangehenden Ansprüche, **dadurch gekennzeichnet, dass** das Rollensystem am Kopf (7) montiert ist und zwei Paar Führungsrollen (24), die entlang der Seitenwände des Profils (5), das gerade geschweißt wird, rollen, und Druckrollen (25), die entlang der Oberkante des Profils (5) rollen, hat.

10. Laserschweißmaschine nach Anspruch 9, **dadurch gekennzeichnet, dass** mindestens eines der beiden Führungsrollenpaare (24) mit Hilfe von Feinstellschrauben (27) positioniert wird.

11. Laserschweißmaschine nach Anspruch 10, **dadurch gekennzeichnet, dass** das andere Paar Führungsrollen (24) mit Hilfe einer unter Druck setzenden Rolle (28) an die Seitenwand des Profils, das gerade geschweißt wird, andrückbar ist.

12. Laserschweißmaschine nach Anspruch 9, **dadurch gekennzeichnet, dass** die Druckrollen (25) mit Hilfe von zusätzlichen unter Druck setzenden Rollen (28) gegen die Oberkante des Profils (5), das gerade geschweißt wird, drücken.

13. Laserschweißmaschine nach Anspruch 7, **dadurch gekennzeichnet, dass** das zweite Teil (7.2) des Kopfes (7) eine gekrümmte Zahnstange (13) hat, die mit einem Ritzel (12), das am ersten Teil (7.1) befestigt ist, zusammenwirkt, um eine Rotationsbewegung des zweiten Teils (7.2) in Bezug auf das erste Teil (7.1) um die Drehachse (Y') zu bewirken.

14. Laserschweißmaschine nach Anspruch 7 und 13, **dadurch gekennzeichnet, dass** das zweite Teil (7.2) des Kopfes (7) einen Motor (14) hat, der ein Ritzel (16) antreibt, und dass dieses Ritzel (16) mit einem Ritzel (15), das im dritten Teil (7.3) untergebracht ist, zusammenwirkt, um eine Rotationsbewegung des dritten Teils (7.3) in Bezug auf das zweite Teil (7.2) um die Drehachse (X') zu bewirken.

15. Laserschweißvorrichtung nach einem der vorangehenden Ansprüche, **dadurch gekennzeichnet, dass** der Rahmen (6) an ein Gestell (3) gekoppelt ist, wodurch Bewegungen entlang der kartesischen Achsen (X, Y, Z) in Bezug auf die Auflage ermöglicht werden.

## Revendications

1. Machine de soudage au laser pour souder une section à un composant structurel de grand format, par exemple un longeron en aluminium à une feuille de revêtement courbée dans la construction aéronautique, comprenant :
- un support pour supporter un composant structurel ;
- un système de rouleau pour guider une section et la maintenir contre le composant structurel ;
- un cadre (6) pour supporter au moins deux unités de laser ou de résonateur (1, 2), par lesquelles des faisceaux laser sont produits simultanément pendant l'utilisation ;
- des moyens pour induire un mouvement relatif entre le cadre et le support ; et
- des éléments de guidage comprenant des conduits (1.2, 2.2) et des articulations (1.1, 2.1) avec des miroirs intérieurs correspondants, chacun pour diriger un faisceau laser d'une unité respective à travers une ouverture de passage respective (1.3, 2.3) et en direction d'un côté respectif d'un point de soudage situé à proximité de celui-ci ;
**caractérisée en ce que** l'ouverture de passage de chaque élément de guidage est fixée à une tête (7), qui est montée en rotation autour de trois axes (X', Y', Z').

2. Machine de soudage au laser selon la revendication 1, dans laquelle il y a deux unités de laser ou de résonateur et les éléments de guidage des deux unités (1, 2) sont réalisés pour être symétriques l'un à l'autre.

3. Machine de soudage au laser selon l'une quelconque des revendications 1 ou 2, dans laquelle les extrémités des éléments de guidage ayant les ouvertures de passage (1.3, 2.3) sont reliées mécaniquement à la tête (7) au moyen de supports de fixation (19) qui peuvent se déplacer le long de deux axes (Y'', Z'').

4. Machine de soudage au laser selon la revendication 3, dans laquelle les supports de fixation (19) exercent une action conjointe avec des vis filetées (18, 22) pour induire des déplacements dans la direction des axes (Y'', Z'').

5. Machine de soudage au laser selon la revendication 4, dans laquelle les vis filetées (18, 22) sont entraînées par des moteurs (17, 20).

6. Machine de soudage au laser selon l'une quelconque des revendications 4 ou 5, dans laquelle au moins un capteur (23), configuré pour enregistrer des variations entre les déplacements théoriques et réels de la tête (7) et les transmettre à un mécanisme de correction, est prévu pour contrôler les vis filetées (18, 22) et, par ce moyen, pour contrôler les distances entre les ouvertures de passage (1.3, 2.3) des éléments structurels et le point de soudage.

7. Machine de soudage au laser selon l'une quelconque des revendications précédentes, dans laquelle la tête (7) comprend :
- un premier composant (7.1) fixé sur une colonne verticale (8) qui peut tourner autour de son axe longitudinal (Z') ;
- un deuxième composant (7.2) relié de façon mobile au premier composant (7.1) le long de guides courbés (11) situés sur le premier composant (7.1), qui peut ainsi tourner autour d'un autre axe (Y') ; et
- un troisième composant (7.3), couplé au deuxième composant (7.2) et supportant des supports de fixation (19) fixés à la tête (7), qui peut tourner autour d'un autre axe (X').

8. Machine de soudage au laser selon la revendication 7, dans laquelle les ouvertures de passage (1.3, 2.3) des éléments de guidage peuvent tourner indépendamment l'une de l'autre autour de trois axes (X', Y', Z') ou simultanément autour de deux de ces trois axes (X', Y', Z').

9. Machine de soudage au laser selon l'une quelconque des revendications précédentes, dans laquelle le système de rouleau est monté sur la tête (7) et comprend deux paires de rouleaux de guidage (24) qui roulent le long des parois latérales de la section soudée (5) et de rouleaux presseurs (25) qui roulent le long du bord supérieur de la section (5).

10. Machine de soudage au laser selon la revendication 9, dans laquelle au moins l'une des deux paires de rouleaux de guidage (24) est positionnée au moyen de vis micrométriques (27).

11. Machine de soudage au laser selon la revendication 10, dans laquelle l'autre paire de rouleaux de guidage (24) peut être maintenue contre la paroi latérale de la section soudée au moyen d'un rouleau de pressurisation (28).

12. Machine de soudage au laser selon la revendication 9, dans laquelle les rouleaux presseurs (25) font pression sur le bord supérieure de la section soudée (5) au moyen de rouleaux de pressurisation supplémentaires (28).

13. Machine de soudage au laser selon la revendication 7, dans laquelle le deuxième composant (7.2) de la tête (7) possède un bâti courbé (13) qui coopère avec un pignon (12) fixé sur le premier composant (7.1) pour induire un déplacement giratoire du deuxième composant (7.2) par rapport au premier composant (7.1) autour d'un axe de rotation (Y').

14. Machine de soudage au laser selon les revendications 7 et 13, **caractérisée en ce que** le deuxième composant (7.2) de la tête (7) possède un moteur (14) entraînant un pignon (16), et **en ce que** ce pignon (16) coopère avec un pignon (15) logé dans le troisième composant (7.3) pour induire un déplacement giratoire du troisième composant (7.3) par rapport au deuxième composant (7.2) autour d'un axe de rotation (X').

15. Machine de soudage au laser selon l'une quelconque des revendications précédentes, dans laquelle le cadre (6) est couplé à un portique (3) pour un déplacement le long d'axes cartésiens (X, Y, Z) par rapport au support.
